# EUROPEAN PATENT APPLICATION

(11) **EP 2 130 802 A1**
(43) Date of publication of application: **09.12.2009**
(21) Application number: 08722074.5
(22) Date of filing: 07.03.2008
(51) Int. Cl.: C02F 1/52, B01D 61/02, C02F 1/28, C02F 1/32, C02F 1/44, C02F 1/46, C02F 1/78, C02F 9/00

(54) **METHOD FOR TREATMENT OF BLACK LIQUOR CONTAINING NO SULFIDE**

(30) Priority: 07.03.2007 JP 2007057841
(71) Applicant: Nihon Cellulose Co., Ltd., Tsurumi-ku Yokohama-shi Kanagawa 230-0051 (JP); Kabushiki Kaisha Toa Kogyo, Fukaya-shi Saitama 366-0821 (JP)
(72) Inventor: AKO, Akira, Yokosuka-shi Kanagawa 239-0820 (JP); KOIKE, Kazumasa, Sagamihara-shi Kanagawa 220-0203 (JP)
(74) Representative: Vossius & Partner
(86) International application number: PCT/JP2008/054676
(87) International publication number: WO 2008/108506

(57) **Abstract**

Lignin is flocculated and batched off from a sulfide-free black liquor discharged out of a pulp digestion step by water disposal techniques, and organic matters remaining in the filtrate are removed to recover water, acids and caustic soda.

A mineral acid and, if necessary, diluting water is added to the black liquor to control its pH to 1 to 7, and a flocculant is added to the black liquor to filtrate out flocculating lignin. Further, ozone is brought into contact with the filtrate to oxidize and break down organic matters in the filtrate and remaining organic matters are adsorbed onto activate charcoal for removal.

## Description

### TECHNICAL FIELD

The present invention relates to the disposal of a sulfide-free black liquor discharged out of a pulp digesting step for the purpose of recovering lignin from the black liquor by water disposal techniques.

### BACKGROUND ART

Generally in pulp production by the kraft method, black liquor discharged from a digesting step is concentrated to bring the proportion of solid matters (total evaporative remnants) up to 70% by weight or higher, and the solid matters are incinerated to recover thermal energy and chemicals (soda and sodium sulfide) from incinerated ashes.

Now then, the raw woody material for pulp contains silica (silicon dioxide) although varying in proportion depending wood types. Non-woody raw materials, especially bagasse, bamboo and palm contain it in large amounts. Silica is insoluble in water and acids, but it dissolves in alkalis such as caustic soda into alkali silicates.
The alkali silicates include sodium silicate (Na₂SiO₃) that sticks and clings to metals and corrode them in a dried state. Such corrosion takes place mainly at a black liquor concentrator in a pulp-making plant, doing damage to evaporating and heating pipes, etc. To prevent this, much labor is needed, and the possible best way is to use a raw material having a reduced content of silica.

If even black liquors having a high content of silica can be disposed, it would then be possible to use a woody material having a high content of silica, and if even a black liquor discharged out of the digestion of a non-woody material having a high content of silica is disposed, it would then be possible to use as the pulp raw material a material that is not that much used so far in the art.

In conjunction with the disposal process for black liquors using water disposal techniques, there are the following publications.

The inventors have already filed Japanese Patent Application No. 2007-006159: Patent Publication 1 to come up with a pulp-making process wherein the raw material is partially oxidized by dilute nitric acid, and then digested by dilute caustic soda.

Regarding making black liquors acidic for lignin removal, there is Patent Publication 2 (JP(A) 2006-102743) in which an acid is added to a black liquor to control its pH to 2.5 to 3.5, a flocculant is added to the black liquor to separate it into lignin and a supernatant liquor which is then brought into contact with ozone gas to oxidize and remove organic matters contained in the supernatant liquor, and after neutralization, activated charcoal is used for adsorption and removal of the organic matters.

Regarding bleaching pulp using ozone (to oxidize and break down organic matters), there is Patent Publication 3 (JP(A) 2006-283213) in which pulp is irradiated with ultraviolet radiation or visible light of 100 to 400 nm wavelength under an acidic condition of pH 2 to 4 and in the presence of ozone at a concentration of 0.5 to 100 ppm.

In Patent Publication 4 (JP(A) 6-184974), pulp is brought into contact with a mixed gas consisting of 85 to 95% by weight of oxygen and 5 to 15% by weight of ozone under pH 2 to 4 conditions. The ozone is generated by an ozone generator using an oxygen-enriched gas.

In the examples of Patent Publication 5 (JP(A) 8-188976), bleaching is carried out at pH 2 controlled with sulfuric acid.

Patent Publication 6 (P10-510469A) describes that reacted off-gas of ozone used for bleaching (having a concentration of 6 to 14% by weight) is brought into contact with an alkaline medium for breaking down and absorption with carbonic-acid gas.

In Patent Publication 7 (JP(A) 2000-237772), soluble yet difficult-to-break-down organic matters in water are oxidized and broken down using ozone and ultraviolet radiation: the organic matters are disposed at pH 4 to 6 using a medium- or high-pressure ultraviolet lamp, and disposal liquor is further disposed in an adsorption-by-activated-charcoal tower.

Non-Patent Publication 1 (Chapter 1 - Trends of technical developments as viewed from Patents "Wastewater Disposal Technology", Homepage of the Patent Office refers to wastewater disposal technologies, introducing (1) flocculation · precipitation disposal, (2) adsorption, (3) membrane separation process and filtration, and (4) utilization of ozone, etc. as organic wastewater disposal.
Patent Publication 1: Japanese Patent Application No. 2007-006159
Patent Publication 2: JP(A) 2006-102743
Patent Publication 3: JP(A) 2006-283213
Patent Publication 4: JP(A) 6-184974
Patent Publication 5: JP(A) 8-188976
Patent Publication 6: P10-510469A
Patent Publication 7: JP(A) 2000-237772
Non-Patent Publication 1: Chapter 1 - Trends of technical developments as viewed from Patents "Wastewater Disposal Technology" (http://www.jpo:go.jp/shiryou/s sonota/map/ippan08/04/4-2. htm) Homepage of the Patent Office

### DISCLOSURE OF THE INVENTION

### OBJECT OF THE INVENTION

The present invention relates to the disposal of a sulfide-free black liquor discharged out of a digesting step of pulp, and has for its technical object to remove lignin by water disposal technique and recover water, acids, caustic soda, etc.

The inventors have already filed Japanese Patent Application No. 2007-006159 (Patent Publication 1) to come up with a pulp-making process in which partial oxidization is carried out with dilute nitric acid and, thereafter, digestion is performed with dilute caustic soda. That black liquor is free of sulfides and contains lignin at a concentration of a few % by weight, and so is particularly suited for the disposal of black liquors according to the invention.

### EMBODIMENTS FOR ACCOMPLISHING THE OBJECT

The inventors have achieved the aforesaid object by embodying the invention as follows.
[1] A black liquor disposal process for flocculating and batching off lignin from a sulfide-free black liquor that is discharged out of a pulp digesting step, **characterized in that** a mineral acid and, if necessary, diluting water is added to the black liquor to control its pH to 1 to 7, and a flocculant is then added to the black liquor for flocculating and batching off lignin.
[2] A black liquor disposal process for flocculating and batching off lignin from a sulfide-free black liquor that is discharged out of a pulp digesting step, **characterized in that** a mineral acid and, if necessary, diluting water is added to the black liquor to control its pH to 1 to 7, a flocculant is added to the black liquor for flocculating and filtrating lignin, and ozone is brought into contact with a filtrate to oxidize and break down organic matters in the filtrate.
[3] A black liquor disposal process for flocculating and batching off lignin from a sulfide-free black liquor that is discharged out of a pulp digesting step, characterized by carrying out in order:
   (1) a neutralization step of adding a mineral acid and, if necessary, diluting water to the black liquor to control its pH to 6 to 9,
   (2) a first flocculation step of adding a flocculant to a liquor obtained in the neutralization step to flocculate lignin,
   (3) a first separation step of batching off lignin flocculated in said step (2),
   (4) a pH control step of adding a mineral acid and, if necessary, diluting water to a filtrate obtained in said step (3) to control a concentration of solid matters to 1 to 8% by weight and its pH to 1 to 3,
   (5) a second flocculation step of adding a flocculant to a liquor obtained in said step (4) to flocculate lignin, and
   (6) a second separation step of batching off lignin obtained in said step (5).
[4] The black liquor disposal process as recited in [3] above, **characterized in that** there is an oxidization-by-ozone step applied, in which ozone is further brought into contact with the filtrate batched off in said second separation step to oxidize and break down organic matters in the filtrate.
[5] The black liquor disposal process as recited in [2] or [4] above, **characterized in that** the step in which ozone is brought into contact with the filtrate is carried out under ultraviolet irradiation.
[6] The black liquor disposal process as recited in any one of [2], [4] or [5] above, **characterized in that** there is an adsorption-by-activated-charcoal step applied, in which activated charcoal is brought into contact with the filtrate leaving the ozone contact step to adsorb and remove organic matters in the filtrate.
[7] The black liquor disposal process as recited in [6] above, **characterized in that** reverse osmosis using a reverse osmosis membrane method is applied to disposal liquor discharged out of the adsorption-by-activated-charcoal step to obtain concentrated salt water and desalted disposal water.
[8] The black liquor disposal process as recited in [7] above, **characterized in that** salt water having a salt content of 80 g/1,000 ml or more is recovered as said concentrated salt water, and there is an electrolysis step applied, in which electrolysis is applied to said salt water to recover the mineral acid and caustic soda.
[9] The black liquor disposal process as recited in [1] or [2] above, **characterized in that** said black liquor is obtained by a method in which woody chips are immersed in dilute caustic soda in a hydrophilic treatment step for making them hydrophilic, introducing the chips in a washing step for removal of alkalis, oxidizing the chips with dilute nitric acid at normal temperature or with application of heat in an oxidizing step to partially oxidize lignin contained in the chips, introducing the chips in a washing step to wash them, heating the chips under atmospheric pressure with dilute caustic soda in a digesting step to digest the chips, and finally separating the chips into digested pulp and a black liquor containing lignin.

### ADVANTAGES OF THE INVENTION

(1) As the pH of the black liquor is controlled to neutrality or acidity in removal of lignin from the black liquor, it allows the dissolved lignin to turn easily into a suspendible substance for flocculation and separation so that the removal rate of lignin can be improved, facilitating black liquor disposal.
(2) Lignin, water, acids and caustic soda can be recovered from black liquor discharged out of a pulp digestion step and free of sulfide.
(3) Even black liquor having a high concentration of silica can be disposed so that for pulp raw materials use may be made of woody or non-woody raw materials that are not used with the kraft method thanks to an increased content of silica.

### BRIEF DESCRIPTION OF THE DRAWINGS

Fig. 1 is one flowchart illustrative of the inventive process.
Fig. 2 is another flowchart illustrative of the inventive process.
Fig. 3 is a flowchart for the production of black liquor used in the inventive process.

### BEST MODE FOR CARRYING OUT THE INVENTION

With the black liquor disposal process set forth in Patent Publication 2 (JP(A) 2006-102743), an acid is added to the black liquor to control its pH to 2.5 to 3.5, and a flocculant is added to separate it into lignin and a supernatant liquor; however, the removal rate of lignin is still less than satisfactory.

According to the invention, experimentation was carried out as follows, using as the black liquor a sulfide-free black liquor discharged out of the pulp digestion step. More specifically, the black liquor used here is a black liquor discharged out of the process set forth in Japanese Patent Application No. 2007-006159 - Patent Publication 1 the inventors have already filed, i.e., a process in which woody chips are immersed in dilute caustic soda in a hydrophilic treatment step to make them hydrophilic, then the chips are introduced in a washing step for removal of alkalis, then the chips are oxidized with dilute nitric acid in an oxidization step at normal temperature or with the application of heat to partially and selectively oxidize lignin contained in the chips, then the chips are introduced in a washing step for washing, then the chips are heated and digested under atmospheric pressure in a digestion step using dilute caustic soda, and finally the digested production is separated in a washing step into digested pulp and a black liquor containing lignin. This black liquor is free of sulfides, and contains lignin in a concentration of a few % by weight or less.

An exemplar disposal process of using woody chips to obtain digested pulp and a black liquor containing lignin is now explained.

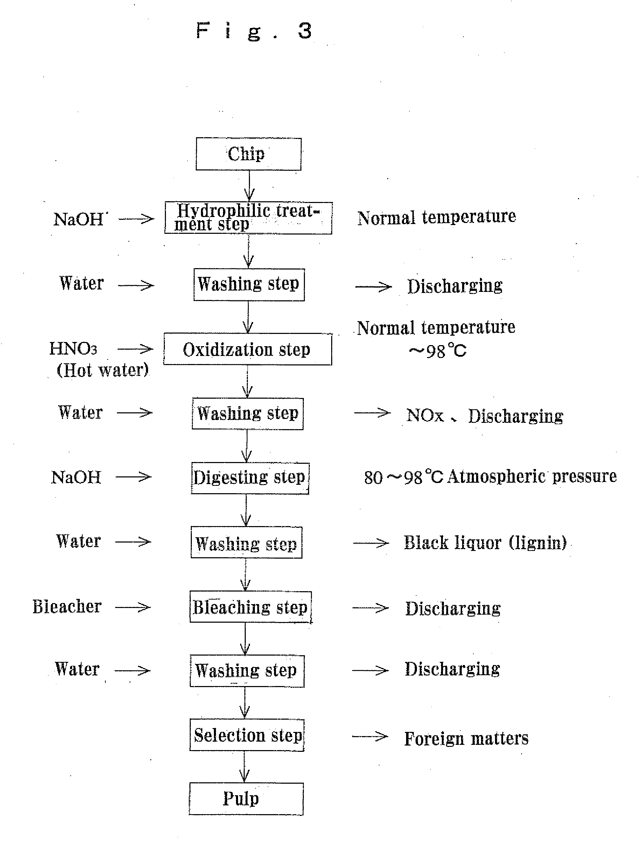

That disposal process is explained along the flowchart of Fig. 3.

Woody material (plywood) occurring from construction work is crushed by means of a crusher (not shown) having a built-in rotary pawl, and further secondarily crushed for classification of woody chips of 50 mm or less. The chips are repeatedly crushed and classified to a further 3 to 15 mm to prepare woody chips.

In the hydrophilic treatment step, the woody chips are immersed in 5% by weight dilute caustic soda. Immersion was carried out at a normal liquor temperature for 50 hours.

In the following process, proper inter-step washing is needed; however, an explanation of the washing is omitted.

An oxidizing tank is a closable container: the chips made hydrophilic are charged together with 5% by weight dilute nitric acid in the oxidizing tank at normal temperature, and steam is blown into the tank from below so that the chips are slowly heated and stirred for oxidization. The interior temperature of the tank reached 80°C after the lapse of 40 minutes. As the temperature grows high, foaming gets violent; however, when foaming is all too violent, heating is temporarily stopped. Gases containing NOₓ were recovered from the top of the oxidizing tank. Lignin was subjected to selective, partial oxidization, but it was dissolved out less much.

Further, hot water was added and heating was continued for a further oxidization. At the time 98°C was reached, foaming begun and the end point of reaction was reached.

The oxidized and washed chips were charged together with 5% by weight caustic soda in a digester, and steam was blown in the tank from below for boiling and stirring. The treating time was set at 1 hour after violent foaming begun.

After the treatment, the chips were separated into digested pulp and black liquor. Lignin was flocculated and batched off from the black liquor, and lignin contained in the chips was dissolved out in an amount of 95% or more.

After washing, the digested pulp was bleached in a bleaching step using sodium hypochlorite, and after washing, foreign matters such as dust were separated off in a selection step.

Note here that the produced pulp is equivalent in quality to that obtained by the kraft method.

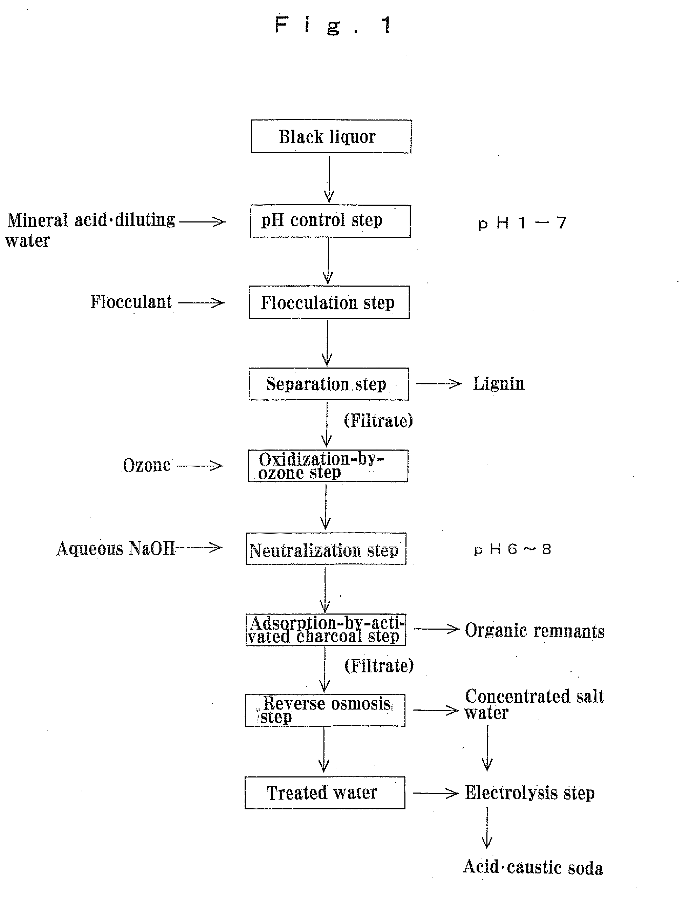

In one run, according to the flowchart (Example 1) shown in Fig. 1, the black liquor obtained in the exemplary disposal process was adjusted to pH2 in one operation for flocculation and separation. The removal rate of organic matters in that case is set out in Table 1.

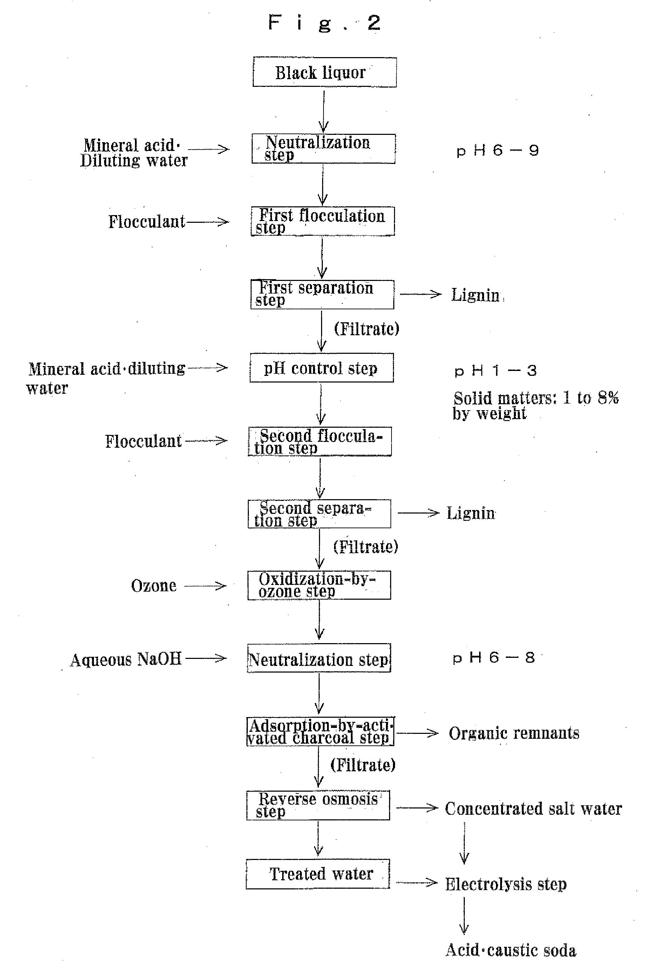

In another run, according to the flowchart (Example 2) shown in Fig. 2, the black liquor was first neutralized for flocculation and separation at pH 8, and then flocculation and separation at pH 2. The removal rate of organic matters in that case is set out in Table 2.

The acid and flocculant used were hydrochloric acid and PAC: poly(aluminum chloride). Black liquors A, B and C are prepared by diluting the black liquor having the same composition. Note here that 75% or more of the organic matters are found to be lignin.

**Table 1**

| Black Liquor | Solid Matters Concentration (% by weight) | Organic Matters Concentration (% by weight) | Removal Rate of Organic matters (%) |
|---|---|---|---|
| A | 4.0 | 2.5 | 66 |
| B | 2.0 | 1.25 | 63 |
| C | 1.33 | 0.83 | 67 |

**Table 2**

| Black Liquor | Solid Matters Concentration (% by weight) | Organic Matters Concentration (% by weight) | Removal Rate of Organic matters (%) |
|---|---|---|---|
| A | 4.0 | 2.5 | 72 |
| B | 2.0 | 1.25 | 85 |
| C | 1.33 | 0.83 | 88 |

From a comparison of Table 1 with Table 2, it is found that the removal rate of organic matters from the black liquor is more improved when the black liquor was neutralized for flocculation and separation at pH 8 and then flocculation and separation at pH.2 than when the pH of the black liquor was reduced down to 2 in one operation.

The possible reasons could be that while the black liquor contains, in addition to lignin, saccharified broken-down products, fatty acids, resin acids, etc., and among those that are dissolved or turned into a stable colloid and remaining organic matters under acidic conditions, there are organic matters that are flocculated and separated under neutral conditions.

### EXAMPLES

### Example 1

The present invention is now explained with reference to the flowchart of Fig. 1.

As the black liquor, a sulfides-free black liquor discharged out of the pulp digestion step is used.

The black liquor suited for the inventive disposal is a black liquor discharged out of the process set forth in Japanese Patent Application No. 2007-006159 - Patent Publication 1, i.e., the pulp-making process in which chips are partially oxidized with dilute nitric acid, and then digested with dilute caustic soda. More specifically, that black liquor is free of sulfides, and contains lignin in a concentration of a few % by weight or less.

Note here that a black liquor occurring with the kraft method where the incorporation of sulfides is unavoidable cannot be applied to the invention, because the sulfides are oxidized into sulfur that in turn clings and sticks to disposal equipment, rendering it difficult to run.

In the pH control step the mineral acid and, if necessary, diluting water is added to the black liquor to control its pH to 1 to 7. The mineral acid used here may be hydrochloric acid, sulfuric acid or the like.

In the flocculation step, the black liquor is stirred with the addition of the flocculant to precipitate (or float) a flocculate. The flocculant used here may be broken down into an inorganic one such as sulfuric acid band, aluminum chloride, and PAC: poly (aluminum polychloride), and an organic one such as polyamine, DADMAC, melamine acid colloid, and dicyandiazide.

Each flocculant has its own optimum pH range, and so an appropriate selection should be made from various flocculants depending on pH. There are occasions when increased effects may be obtained through combinations of inorganic flocculants with organic flocculants.

In this step PAC: poly (aluminum chloride) is preferable because it may be used in a wide pH range. The amount of PAC used may be a few tens to few hundred ppm.

In the separation step, the flocculant is added and stirred to separate out a flocculate (most of which is lignin) that precipitates or floats, and the flocculate is separated off and dehydrated.

By way of example but not by way of limitation, the dehydrating means used here may be filtration, centrifugal dehydration, belt-press dehydration, screw-press dehydration, and so on.

Further, some disposal steps may be added.

In one additional step that is an oxidization-by-ozone step, the filtrate discharged out of the separation step is oxidized for removal of organic matters in the liquor.

Ozone, because of having strong oxidizing power, is used for the oxidization of organic matters. The oxidization by ozone may come to a halt on the way progressing to carbon dioxide. For this reason, there is accelerated oxidization carried out in which ultraviolet radiation or a solid catalyst such as a titanium dioxide photocatalyst is used, resulting in the occurrence of active oxygen having oxidizing power stronger than ozone.

If hydrochloric acid is used as the mineral acid and the treatment vessel is irradiated inside with ultraviolet radiation, then chlorine acids such as hypochlorite (ClO⁻) and chlorite (ClO2⁻) are generated to release active oxygen, resulting in a further increase in oxidizing power.

Preferably, the ozone generator used here should have a high ozone concentration and a high feed pressure; commercially available is an ozone generator in which in place of air, high-concentration oxygen of about 90% purity generated from a PSA oxygen generator is used as the raw material to generate ozone at a concentration of 15% by weight and a feed pressure of about 12 atm. (see Patent Publications 4 and 6 too). That ozone generator is well suited for use with the invention.

As ozone is jetted from a nozzle in a micro-bubble form, it accelerate ozone-liquor contact and, hence, oxidization reactions. Off-gases containing unreacted ozone are released through a pressure valve after the decomposition of ozone in ozone breakdown equipment. The released off-gases may be used as aeration oxygen, because they partly contain carbonic acid gas, nitrogen and argon, but most of them are oxygen.

In another additional step that is the adsorption-by-activated-charcoal step, traces of remaining organic matters are removed by adsorption.

This adsorption has higher efficiency under neutral conditions: it is preferable that liquors discharged out of the oxidization-by-ozone step are neutralized with caustic soda, and then passed through a (fixed bed) tank filled inside with particulate activated charcoal.

Powdery activated charcoal may be mixed and stirred with the discharged liquor, and after adsorption, the powdery activated charcoal is separated out by means of filtration or precipitation.

Activated charcoal whose adsorption capability goes down may be regenerated by means of heat, chemicals or the like.

In the reverse osmosis step that is yet another additional step, disposal liquor discharged out of the adsorption-by-activated-charcoal is separated into water and concentrated salt water.

As the disposal liquor side is pressurized, it causes water to osmose through a reverse osmosis membrane, and solute (salt matter) to remain on the disposal water side and be concentrated.

The disposed water, because of containing reduced amounts of impurities, is recovered as process water. On the other hand, the concentrated salt is fed to the electrolysis step.

In the electrolysis step that is a further additional step, use may be made of an ion exchange membrane method, a diaphragm partition method, and a mercury method. The ion exchange method makes sure caustic soda, hydrogen and chlorine gas are obtained with high purities. However, the ion exchange method is disturbed by calcium ions, magnesium ions and sulfate ions; so it is important that they be previously removed out of the concentrated salt water.

High-purity hydrochloric acid may be produced from the recovered hydrogen and chlorine gas.

### Example 2

Another example of the invention is now explained with reference to the flowchart of the invention of Fig. 2.

Example 2 is the same as Example 1 in that the sulfide-free black liquor discharged out of the pulp digestion step is used.

In the neutralizing step a mineral acid and, if necessary, diluting water is added to the black liquor to control its pH to 6 to 9. The mineral acid used here may include hydrochloric acid, and sulfuric acid. Note here that nitric acid is not preferable because it tends to give rise to NOₓ in the later steps. As the concentration of solid matters (total remnants after evaporation) is lower, the rate of collection of organic matters during flocculation grows high, but as that concentration is all too low, disposal efficiency goes worse because the liquor amount grows large. Dilution should thus be carried out such that the solid matters are kept at 1 to 8% by weight in the later pH control step.

In the first flocculation step, stirring is carried out with the addition of a flocculant to precipitate (or float) a flocculate. The flocculant or the like used here may be same as in Example 1.

In the first separation step, stirring is carried out with the addition of the flocculant to separate the precipitating (or floating) flocculated and dehydrate it. The dehydration means used here may be the same as in Example 1.

In the pH control step, a filtrate discharged out of the first separation step is treated with the mineral acid (hydrochloric acid, sulfuric acid or the like) and diluting water to control its pH and solid content to 1 to 3 and 1 to 8% by weight, respectively. At less than pH 1, there is a rapid increase in acid consumption, but any further improvement in effect is not expected. At greater than pH 3, there is a decrease in the rate of flocculation. At a solid content of less than 1% by weight, there is an improvement in the rate of flocculation, but the amount of the liquor to be treated grows too large, making efficiency worse. A solid matter content of greater than 8% by weight makes flocculation virtually impossible. Regarding temperature, no special heating or cooling is needed; room temperature may be applied.

The same as in the first flocculation step may apply to the second flocculation step. Because the pH is low, an inorganic flocculant such as sulfuric acid band, aluminum chloride, and PAC: poly (aluminum chloride) is suitable for the flocculant used here.

The same as in the first separation step may apply to the second separation step.

In the oxidization-by-ozone step, a filtrate discharged out of the second separation step is oxidized for removal of organic matters.

In the adsorption-by-activated-charcoal step, remaining traces of organic matters are adsorbed onto activated charcoal for removal.

In the reverse osmosis step, the disposal liquor discharged out of the adsorption-by-activated-charcoal step is separated into water and concentrated salt water.

The electrolysis step may be carried out by an ion exchange method, a diaphragm partition method, and a mercury method; however, if the ion exchange method is used, it is then possible to obtain high-purity caustic soda, hydrogen and chlorine gas.

## Claims

1. A black liquor disposal process for flocculating and batching off lignin from a sulfide-free black liquor that is discharged out of a pulp digesting step, **characterized in that** a mineral acid and, if necessary, diluting water is added to the black liquor to control its pH to 1 to 7, and a flocculant is then added to the black liquor for flocculating and batching off lignin.

2. A black liquor disposal process for flocculating and batching off lignin from a sulfide-free black liquor that is discharged out of a pulp digesting step, **characterized in that** a mineral acid and, if necessary, diluting water is added to the black liquor to control its pH to 1 to 7, a flocculant is added to the black liquor for flocculating and filtrating lignin, and ozone is brought into contact with a filtrate to oxidize and break down organic matters in the filtrate.

3. A black liquor disposal process for flocculating and batching off lignin from a sulfide-free black liquor that is discharged out of a pulp digesting step, **characterized by** carrying out in order:
(1) a neutralization step of adding a mineral acid and, if necessary, diluting water to the black liquor to control its pH to 6 to 9,
(2) a first flocculation step of adding a flocculant to a liquor obtained in the neutralization step to flocculate lignin,
(3) a first separation step of batching off lignin flocculated in said step (2),
(4) a pH control step of adding a mineral acid and, if necessary, diluting water to a filtrate obtained in said step (3) to control a concentration of solid matters to 1 to 8% by weight and its pH to 1 to 3,
(5) a second flocculation step of adding a flocculant to a liquor obtained in said step (4) to flocculate lignin, and
(6) a second separation step of batching off lignin obtained in said step (5).

4. The black liquor disposal process as recited in claim 3, **characterized in that** there is an oxidization-by-ozone step applied, in which ozone is further brought into contact with the filtrate batched off in said second separation step to oxidize and break down organic matters in the filtrate.

5. The black liquor disposal process as recited in claim 2 or 4, **characterized in that** the step in which ozone is brought into contact with the filtrate is carried out under ultraviolet irradiation.

6. The black liquor disposal process as recited in any one of claim 2, 4 or 5, **characterized in that** there is an adsorption-by-activated-charcoal step applied, in which activated charcoal is brought into contact with the filtrate leaving the ozone contact step to adsorb and remove organic matters in the filtrate.

7. The black liquor disposal process as recited in claim 6, **characterized in that** reverse osmosis using a reverse osmosis membrane method is applied to disposal liquor discharged out of the adsorption-by-activated-charcoal step to obtain concentrated salt water and desalted disposal water.

8. The black liquor disposal process as recited in claim 7, **characterized in that** salt water having a salt content of 80 g/1,000 ml or more is recovered as said concentrated salt water, and there is an electrolysis step applied, in which electrolysis is applied to said salt water to recover the mineral acid and caustic soda.

9. The black liquor disposal process as recited in claim 1 or 2, **characterized in that** said black liquor is obtained by a method in which woody chips are immersed in dilute caustic soda in a hydrophilic treatment step for making them hydrophilic, introducing the chips in a washing step for removal of alkalis, oxidizing the chips with dilute nitric acid at normal temperature or with application of heat in an oxidizing step to partially oxidize lignin contained in the chips, introducing the chips in a washing step to wash them, heating the chips under atmospheric pressure with dilute caustic soda in a digesting step to digest the chips, and finally separating the chips into digested pulp and a black liquor containing lignin.
